# EUROPEAN PATENT SPECIFICATION

(11) **EP 1 461 159 B1**
(45) Date of publication and mention of the grant of the patent: **01.08.2007**
(21) Application number: 01966760.9
(22) Date of filing: 11.04.2001
(51) Int. Cl.: B05B 7/04, A62C 31/05, A01C 23/00

(54) **TOROIDAL NOZZLE FOR AEROSOL GENERATION**
RINGFÖRMIGE DÜSE ZUR AEROSOLERZEUGUNG
BUSE TOROIDALE POUR LA GENERATION D'AEROSOLS

(30) Priority: 11.04.2000 SK 5262000
(43) Date of publication of application: 29.09.2004
(73) Proprietor: Chrobak, Julius, 040 01 Kosice (SK)
(72) Inventor: Chrobak, Julius, 040 01 Kosice (SK)
(74) Representative: Regina, Ivan
(86) International application number: PCT/SK2001/000009
(87) International publication number: WO 2001/076765

(56) References cited:
- EP-A- 0 314 354
- NL-A- 7 306 933

## Description

### The Area of Technique

The Invention concerns the toroidal nozzle for aerosol generation preferably appointed for the extinguishing and the sprays of chemicals in agriculture.

### The Present State of Technique

To generate the aerosol, the equipment are used, in which the liquid outgoing from the ejector placed in the axis of spraying nozzle is sprayed by gas stream or the liquid is centrally delivered under the high pressure into the spraying nozzle which is connected with the surrounding atmosphere.

The requirements of liquid Inlet under the high pressure is their disadvantages and in case of spraying the liquid in the stream of gas, a small amount of spraying liquid is its disadvantage. Spraying into the space connected with the surrounding atmosphere is common disadvantage.

There is a known solution protected by the European patent document EP 0 314 354 A. Aerosol is generated in a jet chamber where both the inlet of gas and outlet of aerosol are located in a common axis. The main disadvantage of this solution is that the cyclone effect is not achieved which results in higher energy requirements for aerosol generation and its lower qualitative parameters.

### The Matter of Invention

The above mentioned disadvantages are eliminated wlh the toroidal nozzle for aerosol generation according to the claim which consists of the solid of shape toroidal chamber with the system of holes and nozzles, the matter of invention is based on the fact that toroidal chamber is divided in perpendicular direction to its axis with annular ring plate with nozzles. At least one entry axial hole for liquid input is in the entry flange of equipment solid and there is at least one outgoing axial hole for aerosol output in the outgoing flange of equipment solid. In the periphery surface of equipment solid, flat nozzles of gas Inlet are created which are tangentially orientated towards to toroidal chamber and simultaneously perpendicular orientated towards the direction of the nozzles In annular ring plate.

According to the invention, the toroidal nozzle for aerosol generation enables to generate aerosol cyclone In the toroidal chamber. The aerosol Is lead trough output axially holes to next process Into the space which doesn't have to be directly connected with the atmosphere.

According to the invention, the toroidal nozzle for aerosol generation will enable to generate great amount of aerosol, it has a small dimensions an it allows the output of two-phase mixture on the output from the toroidal nozzle for aerosol generation Into the space with the pressure which is higher than the atmospheric pressure Is.

### The Overview of the Pictures In the Plans

The invention will be explained in details by means of plan in which In picture 1 there is a longitudinal section of the toroidal nozzle for aerosol generation according to the invention.

### The Examples of Invention Implementation

The toroidal nozzle for aerosol generation in picture one consists of the solid of equipment 1, with the shape of toroidal chamber 5 which is divided by annular ring plate 6 in the perpendicular direction to its axis. In the annular ring plate 6, the nozzles 4 are created and they are used for liquid inlet towards the direction of axis of toroidal chamber 5 . For the liquid Input Into the annular chamber 5 , there is at least one input axial hole 2 in its input flange of the solid of equipment 1. At least one output axial hole 7 is used for the aerosol output in the output flange of the solid of equipment 1 . In the circumferential surface of the solid of equipment 1 , there are flat nozzles 3 , which are tangentially orientated towards to the toroidal chamber 5 and simultaneously perpendicularly to the direction of nozzles 4.

### Industrial Versatility

According to the invention, the toroidal nozzle for aerosol generation is possible to be used wherever it is necessary to generate aerosol in large mass volumes under the requirements of small dimensions of spray device. Priority area of using is in the extinguishing for mobile and stationary equipment.

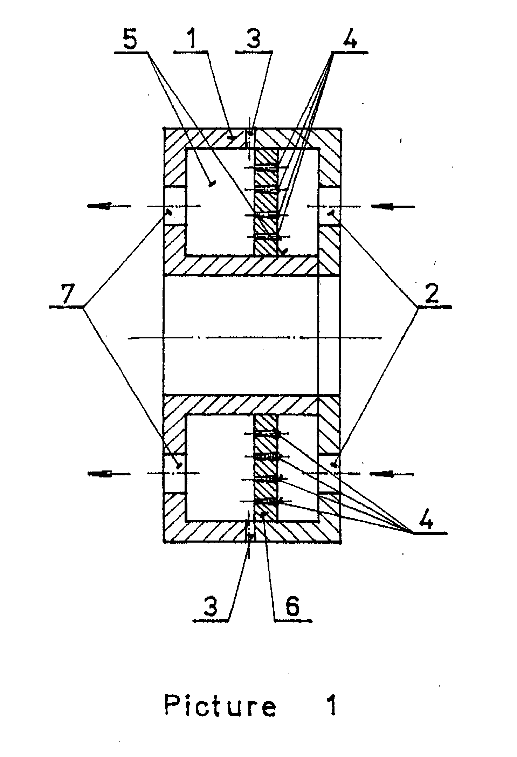

## Claims

1. Toroidal nozzle for aerosol generation consisting of a body (1) defining a toroidal chamber (5) and comprising a system of holes and nozzles, **characterized in that** the toroidal chamber (5) is divided in perpendicular direction to its axis by an annular ring plate penetrated by nozzles (4), whereas at the input side of body (1), there is at least one input axial hole (2), and in the output side of body (1), there is at least one output axial hole (7), and in the circumferential surface of body (1) there are flat nozzles (3) which are tangentially orientated towards the toroidal chamber (5) and simultaneously perpendicular to the direction of the nozzles (4) provided in the annular ring plate (6).

## Patentansprüche

1. Ringförmige Düse zur Aerosolerzeugung, bestehend aus dem Körper (1) in Form der Ringkammer (5) und mit dem System der Öffnungen und Düsen abgesetzt, sich **dadurch gekennzeichnet, daß** die Ringkammer (5) in der senkrechten Richtung an ihre Achse mit einem Kreisringbrett (6) getrennt ist. Durch den Kreisringbrett führen die Düsen (4), wobei in der Eingangflansch des Körpers (1) wenigstens eine axiale Eingangöffnung (2) ist und in der Ausgangflansch des Körpers (1) ist wenigstens eine axiale Ausgangöffnung (7) und in dem Umfangmantel des Körpers (1) sind flache Düsen (3), orientiert tangential zu der Ringkammer (5) und zugleich sankrecht an die Richtung der Düsen (4), die im Kreisringbrett (6) abgesetzt sind.

## Revendications

1. La buse toroidale pour la génération d'aérosols comportant un corps (1) en forme de chambre annulaire (5) et un système ajusté d'orifices et de buses, est **caractérisée par** ce que la chambre annulaire (5) est divisée dans la direction perpendiculaire à son axe par une plaque de baque intermédiaire (6) par laquelle passent les buses (4), tandis que dans la bride d'entrée du corps (1) se trouve au moins un orifice axial d' entrée (2) et dans la bride de sortie du corps (1) se trouve au moins un orifice axial de sortie (7) et dans l'enveloppe circonférentielle du corps (1) se trouvent des buses plates (3) orientées tangentiellement à la chambre annulaire (5) et simultanément orientées perpendiculairement à la direction des buses (4) ajustées dans la plaque de baque intermédiaire (6).
